# EUROPEAN PATENT APPLICATION

(11) **EP 4 703 583 A1**
(43) Date of publication of application: **04.03.2026**
(21) Application number: 25199522.1
(22) Date of filing: 02.09.2025
(51) Int. Cl.: F03D 3/00, F03D 3/02

(54) **WIND POWER GENERATION APPARATUS**

(30) Priority: 03.09.2024 CN 202422161266 U
(71) Applicant: Bitmain Technologies Inc., Beijing 100094 (CN)
(72) Inventor: ZHAN, Ketuan, Beijing, 100094 (CN); HUA, Shuangquan, Beijing, 100094 (CN); LI, Minghao, Beijing, 100094 (CN); WANG, Fei, Beijing, 100094 (CN); PAN, Gaofei, Beijing, 100094 (CN); YIN, Zhenshuo, Beijing, 100094 (CN); XIE, Jinquan, Beijing, 100094 (CN); YANG, Yinchuang, Beijing, 100094 (CN)
(74) Representative: Elzaburu S.L.P.

(57) **Abstract**

The present disclosure provides a wind power generation apparatus, including: a tower body; at least two wind power generators arranged on the tower body and stacked along an extending direction of the tower body; where, a rotation shaft of each wind power generator is parallel to the extending direction and a bottom of each wind power generator is connected with a first connecting member; two first connecting members at the bottoms of two adjacent wind power generators are connected through at least two second connecting members, and an arrangement direction of the second connecting members is different from that of the first connecting members. In embodiments of the present disclosure, the power generation efficiency of the wind power generation apparatus can be improved while reducing the floor space of the wind power generation apparatus and enhancing its stability.

## Description

### TECHNICAL FIELD

The present disclosure relates to the field of new energy power generation, and particularly relates to a wind power generation apparatus.

### BACKGROUND

In related technologies, wind power generators are mainly divided into horizontal-axis wind power generators and vertical-axis wind power generators based on their structural forms. Where, the vertical-axis wind power generators have a small floor space and generate low noise. However, the current vertical-axis wind power generators are predominantly small-size machine, its main power level ranging from 1W to 100kW. Furthermore, according to wind tunnel experiments conducted by the China Aerodynamics Research and Development Center, the wind energy utilization rate of vertical-axis wind power generators is generally between 23% and 30%, which is about 45% lower than the wind energy utilization efficiency of large horizontal-axis wind power generator units. Therefore, a single vertical-axis wind power generator has problems such as low power generation capacity and low electricity output.

### SUMMARY

To overcome the problems in the related art, the present disclosure provides a wind power generation apparatus to improve the power generation efficiency of the wind power generation apparatus while reducing the floor space of the wind power generation apparatus and enhancing the stability of the wind power generation apparatus.

According to an embodiment of the present disclosure, a wind power generation apparatus is provided, including:
a tower body;
at least two wind power generators arranged on the tower body and stacked to each other along an extending direction of the tower body;
where, a rotation shaft of each wind power generator is parallel to the extending direction of the tower body, and a bottom of each wind power generator is connected to a first connecting member;
where, two first connecting members at bottoms of two adjacent wind power generators are connected by at least two second connecting members, and an arrangement direction of the second connecting members is different from an arrangement direction of the first connecting members.

In some embodiments, the two adjacent wind power generators include a first wind power generator and a second wind power generator stacked on the first wind power generator;
at least two second connecting members between the first connecting member at the bottom of the first wind power generator and the first connecting member at the bottom of the second wind power generator are spaced apart and surround the first wind power generator.

In some embodiments, the wind power generation apparatus further includes:
a third connecting member connected between a top of the first wind power generator and the first connecting member at the bottom of the second wind power generator.

In some embodiments, the third connecting member includes:
a first bearing connected to the top of the first wind power generator;
a connecting rod connected to the first connecting member at the bottom of the second wind power generator;
a first rotating body arranged between the first bearing and the connecting rod and connected to the first bearing and the connecting rod respectively.

In some embodiments, the first connecting member is arranged along a direction perpendicular to the extending direction of the tower body; and/or,
the second connecting member is arranged along a direction parallel to the extending direction of the tower body.

In some embodiments, the first connecting member includes a connecting plate, a connecting board, or a connecting rod;
the second connecting member includes a connecting column or a connecting rod.

In some embodiments, the first connecting member is detachably connected to the second connecting member.

In some embodiments, a quantity of the second connecting members between two first connecting members at the bottoms of two adjacent wind power generators is positively correlated with a quantity of the wind power generators.

In some embodiments, the first connecting member at the bottom of the wind power generator located in a first layer is connected to a top of the tower body.

In some embodiments, a stator coil of each wind power generator is connected to an external circuit.

In some embodiments, the wind power generator includes:
a wind wheel;
a power generation module connected to the wind wheel, the power generation module being configured to generate electricity under a drive of the wind wheel;
a second rotating body arranged between the power generation module and the first connecting member at the bottom of the wind power generator, the second rotating body being connected to the first connecting member and the power generation module respectively.

In some embodiments, the wind power generator includes:
a wind wheel including a rotation shaft and at least two blades, where a first support plate and a second support plate are formed at two ends of the rotation shaft respectively, and each blade is connected to the first support plate and the second support plate;
a power generation module connected to the rotation shaft, the power generation module being configured to generate electricity under a drive of the rotation shaft;
a second rotating body arranged between the power generation module and the first connecting member at the bottom of the wind power generator, the second rotating body being connected to the first connecting member and the power generation module respectively.

In some embodiments, the power generation module includes:
a housing arranged between the wind wheel and the second rotating body, the housing being connected to the second rotating body and provided with a through hole;
a stator coil arranged inside the housing and connected to the housing;
a magnetic assembly arranged inside the housing and connected to the rotation shaft penetrated through the through hole by a second bearing, the magnetic assembly being capable of rotating relative to the stator coil under a drive of the rotation shaft.

In the embodiments of the present disclosure, on the one hand, by arranging at least two wind power generators staked along the extending direction of the tower body, it is possible to generate power based on at least two wind power generators while enabling them to share a single tower body. Thus, power generation efficiency of the wind power generation apparatus can be improved while reducing the floor space of at least two wind power generators and lowering the setup cost of the wind power generation apparatus.

On the other hand, by arranging the first connecting member at the bottom of each wind power generator and arranging at least two second connecting members between two adjacent first connecting members, two adjacent wind power generators arranged above the first connecting members can be stably connected. Thus, the connection stability between respective wind power generators can be enhanced, thereby improving the stability of the wind power generation apparatus.

It should be understood that the foregoing general description and the following detailed description are merely exemplary and explanatory and do not limit the present disclosure.

### BRIEF DESCRIPTION OF DRAWINGS

The accompanying drawings here are incorporated into the specification and constitute part of this specification, the accompanying drawings illustrate embodiments conforming to the present disclosure and used together with the specification to explain the principles of the present disclosure.
FIG. 1 is a schematic diagram of a wind power generation apparatus according to an embodiment of the present disclosure.
FIG. 2 is a schematic diagram of a wind power generation apparatus according to an embodiment of the present disclosure.
FIG. 3 is a schematic diagram of a wind power generation apparatus according to an embodiment of the present disclosure.
FIG. 4 is a schematic diagram of a wind power generation apparatus according to an embodiment of the present disclosure.
FIG. 5 is a schematic diagram of a wind power generation apparatus according to an embodiment of the present disclosure.
FIG. 6 is a schematic diagram of a wind power generation apparatus according to an embodiment of the present disclosure.
FIG. 7 is a schematic diagram of a blade in a wind power generation apparatus according to an embodiment of the present disclosure.
FIG. 8 is a schematic diagram of a wind wheel in a wind power generation apparatus according to an embodiment of the present disclosure.
FIG. 9 is a schematic diagram of a power generation module in a wind power generation apparatus according to an embodiment of the present disclosure.
FIG. 10 is a schematic diagram of a wind power generator in a wind power generation apparatus according to an embodiment of the present disclosure.

Reference Signs:
tower body 1; wind power generator 2; wind wheel 21; rotation shaft 211; blade 212; first support member 213; second support member 214; first support plate 215; first bolt 216; second support plate 217; power generation module 22; end cover 221; housing 222; second bearing 223; stator coil 224; magnetic component 225; third bearing 226; bearing retaining ring 227; second bolt 228; second rotating body 23; first connecting member 3; second connecting member 4; third connecting member 5; fourth connecting member 6; fifth connecting member 7; sixth connecting member 8; seventh connecting member 9; first included angle a; second included angle b.

### DESCRIPTION OF EMBODIMENTS

Here, exemplary embodiments will be described in detail, and their examples are shown in the accompanying drawings. When the following description refers to the accompanying drawings, unless otherwise indicated, the same numbers in different accompanying drawings represent the same or similar elements. The implementations described in the following exemplary embodiments do not represent all implementations consistent with the present disclosure. Instead, they are merely examples of apparatuses consistent with some aspects of the present disclosure as detailed in the attached claims.

In related technologies, wind power generators are mainly divided into a horizontal-axis wind power generator and a vertical-axis wind power generator according to different structural forms. Among them, the rotation shaft of the wind wheel of the horizontal-axis wind power generator is parallel to the wind direction, and the rotation shaft of the wind wheel of the vertical-axis wind power generator is perpendicular to the ground or the direction of the airflow.

Moreover, the vertical-axis wind power generator has the characteristic of low start-up wind speed. For the vertical-axis wind power generator with an H-type wind wheel, a start-up wind speed of 2m/s can be achieved through reasonable airfoil and installation angle design, which is superior to the 3m/s start-up wind speed of most current horizontal-axis wind power generators. Additionally, the tip speed ratio (referring to the ratio of the blade tip linear speed of the wind power generator to the wind speed) of the vertical-axis wind wheel of the vertical-axis wind power generator is generally greater than 1.5 and the tip speed ratio of the vertical-axis wind wheel is generally less than 2. The tip speed ratio of the horizontal-axis wind wheel in the horizontal-axis wind power generator is generally greater than 5 and the tip speed ratio of the horizontal-axis wind wheel is less than 7. Since a higher tip speed ratio is more prone to generate significant aerodynamic noise, the vertical-axis wind power generator produces much less noise compared to the horizontal-axis wind power generator. That is, the vertical-axis wind power generator is more flexible in application, and is suitable for urban and residential areas and other application scenes.

However, in related technologies, the vertical-axis wind power generator is mainly small-size machine. A single small vertical-axis wind power generator has problems such as low power generation capacity and low electricity output. For a wind farm with high power generation capacity requirements, increasing the number of vertical-axis wind power generators is a common solution. However, at the same time, it causes problems such as large floor space, a large amount of steel used in tower, and increased costs.

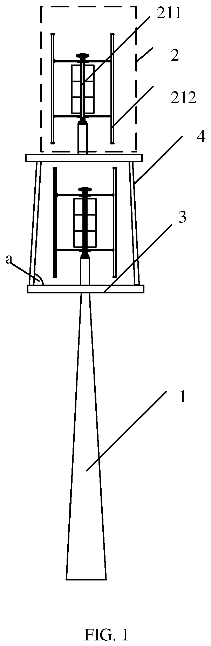

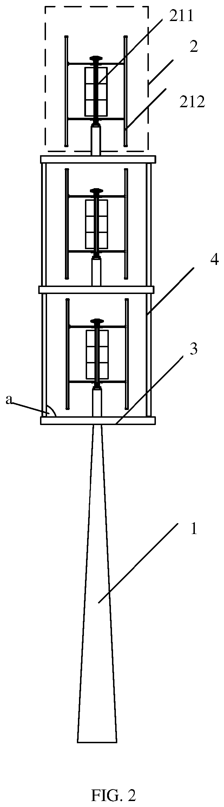

Based on this, referring to FIG. 1, FIG. 1 is a structural schematic diagram of a wind power generation apparatus according to an exemplary embodiment. As shown in FIGS. 1 and 2, the apparatus includes:
tower body 1;
at least two wind power generators 2 arranged on the tower body 1 and stacked to each other along an extending direction of the tower body 1;
where, a rotation shaft 211 of each wind power generator 2 is parallel to the extending direction of the tower body 1, and a bottom of each wind power generator 2 is connected to a first connecting member 3;
where, two first connecting members 3 at the bottoms of two adjacent wind power generators 2 are connected by at least two second connecting members 4, and an arrangement direction of the second connecting members 4 is different from an arrangement direction of the first connecting members 3.

It should be noted that, here, the rotation shaft 211 of each wind power generator 2 is parallel to the extending direction of the tower body 1, which may mean that the arrangement direction of the rotation shaft 211 of each wind power generator 2 is parallel to the extending direction of the tower body 1.

Exemplarily, an angle between the extending direction of the tower body 1 and the ground may be greater than or equal to a first preset angle. At this time, since the arrangement direction of the rotation shaft 211 is parallel to the extending direction of the tower body 1 and the angle between the extending direction of the tower body 1 and the ground may be greater than or equal to the first preset angle, the angle between the arrangement direction of the rotation shaft 211 and the ground may be greater than or equal to the first preset angle.

For example, the angle between the extending direction of the tower body 1 and the ground may be 90°. At this time, the angle between the arrangement direction of the rotation shaft 211 and the ground may also be 90°. That is to say, the rotation shaft of the wind power generator can be arranged perpendicular to the ground, and the wind power generator can be understood as a vertical-axis wind power generator.

In some embodiments, the tower body 1 may be in the form of a monopole tower, a tubular tower, or a tower column. Here, the shape of the tower body 1 is not limited, provided that the tower body 1 can be used to support at least two wind power generators 2 stacked along the extending direction of the tower body 1.

In some embodiments, each wind power generator 2 may be connected to the tower body 1. Alternatively, the wind power generator 2 of at least two wind power generators 2 that is located at the first layer may be connected to the tower body 1, while the remaining wind power generator 2 may not be connected to the tower body 1. That is to say, at least two wind power generators 2 may be stacked above the tower body 1.

In some embodiments, the bottom of each wind power generator 2 may be fixedly connected to the tower body 1. For example, the bottom of each wind power generator 2 may be welded to the tower body 1. Thus, the connection stability between each wind power generator 2 and the tower body 1 can be enhanced.

In other embodiments, the bottom of each wind power generator 2 may be detachably connected to the tower body 1. For example, the bottom of each wind power generator 2 may be threaded connected to the tower body 1. Thus, when maintenance is required on each wind power generator 2, each wind power generator 2 can be disassembled from the tower body 1 for maintenance.

In some embodiments, the bottom of some wind power generators 2 of at least two wind power generators 2 may be fixedly connected to the tower body 1, while the bottom of the remaining wind power generator 2 of at least two wind power generators 2 may be detachably connected to the tower body 1.

Exemplarily, the bottom of the wind power generator 2 located at the first layer may be fixedly connected to the tower body 1, and/or, the bottom of the wind power generator 2 located at the top layer may be detachably connected to the tower body 1. In this way, in the case that the wind power generator 2 at the first layer has a lower height and is easy for maintenance, the stability of the wind power generator 2 can be improved; and the wind power generator 2 at the upper layers can be detached to facilitate maintenance of the wind power generator 2 located at the topmost layer.

In some embodiments, the bottom of each wind power generator 2 may be fixedly connected to the first connecting member. For example, the bottom of each wind power generator 2 may be welded to the first connecting member 3. Thus, the connection stability between each wind power generator 2 and the first connecting member 3 can be enhanced.

In another embodiments, the bottom of each wind power generator 2 may be detachably connected to the first connecting member 3. For example, the bottom of each wind power generator 2 may be threaded connected to the first connecting member 3. Thus, when maintenance is required on each wind power generator 2, each wind power generator 2 can be detached from the first connecting member 3 and maintained.

In some embodiments, the bottom of some wind power generators 2 of at least two wind power generators 2 may be fixedly connected to the first connecting member 3, while the bottom of the remaining wind power generator 2 of at least two wind power generators 2 may be detachably connected to the first connecting member 3.

Exemplarily, the bottom of the wind power generator 2 located at the first layer may be fixedly connected to the first connecting member 3, and/or, the bottom of the wind power generator 2 located at the top layer may be detachably connected to the first connecting member 3. Thus, in the case that the wind power generator 2 at the first layer has a lower height and is easy for maintenance, the stability of the wind power generator 2 can be improved, and the wind power generator 2 at the upper layers can be detached to facilitate the maintenance of the wind power generator 2 located at the topmost layer.

In some embodiments, a first included angle a between the arrangement direction of the first connecting member 3 and the arrangement direction of the second connecting member 4 may be greater than or equal to a second preset angle. Exemplarily, as shown in FIG. 2, the second preset angle may be 90°, and the first included angle a between the arrangement direction of the first connecting member 3 and the arrangement direction of the second connecting member 4 may be 90°.

In some embodiments, the first included angle a between the arrangement direction of the first connecting member 3 and the arrangement direction of the second connecting member 4 may not be 90°. That is to say, there may be an oblique support structure formed between the first connecting member 3 and the second connecting member 4. Exemplarily, referring to FIG. 1, the included angle a between the arrangement direction of the first connecting member 3 and the arrangement direction of the second connecting member 4 may be less than 90°.

In some embodiments, two adjacent wind power generators 2 may include a first wind power generator and a second wind power generator stacked on the first wind power generator. Here, two first connecting members 3 at the bottoms of two adjacent wind power generators 2 are connected through at least two second connecting members 4, which may mean that the first connecting member 3 at the bottom of the first wind power generator and the first connecting member 3 at the bottom of the second wind power generator are connected through at least two second connecting members 4.

In some embodiments, in two adjacent wind power generators 2, the volume of the first wind power generator may be larger than that of the second wind power generator. And/or, the volume of the first connecting member 3 at the bottom of the first wind power generator may be larger than that of the first connecting member 3 at the bottom of the second wind power generator. Thus, the structure of the at least two stacked wind power generators 2 is close to a triangular structure, thereby enhancing the connection stability between at least two wind power generators.

In some embodiments, in the two adjacent wind power generators 2, the volume of the first wind power generator may be the same as that of the second wind power generator.

In embodiments of the present disclosure, on the one hand, by arranging at least two wind power generators 2 staked along the extending direction of the tower body 1, it is possible to generate power based on at least two wind power generators 2 while enabling them to share a single tower body 1. Thus, power generation efficiency of the wind power generation apparatus can be improved while reducing the floor space of at least two wind power generators 2 and lowering the setup cost of the wind power generation apparatus. On the other hand, by arranging the first connecting member 3 at the bottom of each wind power generator 2 and arranging at least two second connecting members 4 between two adjacent first connecting members 3, two adjacent wind power generators 2 arranged above the first connecting members 3 can be stably connected. Thus, the connection stability between respective wind power generators 2 can be enhanced, thereby improving the stability of the wind power generation apparatus.

It can be understood that, in embodiments of the present disclosure, by sharing a single tower body and stacking at least two wind power generators above the tower body, a steamer-type wind power generator structure that shares a single tower body can be formed. Here, when the rotation shaft of the wind power generator is parallel to the extending direction of the tower body, i.e., when the wind power generator is a vertical-axis type wind power generator, the structure of a steamer-type wind power generator sharing a single tower body can be understood as a steamer-type vertical axis wind power generator unit.

Compared with the relevant technology of using a single vertical axis wind power generator to generate electricity, which results in low power generation capacity, the steamer-type vertical axis wind power generator unit provided in the embodiment of the present disclosure has higher power generation capacity. Compared to related technologies that require the construction of multiple tower tubes to generate electricity using multiple vertical wind power generators installed on the tower tubes, which results in a large amount of steel used for the tower tubes, a large floor space and high construction costs, the steamer-type vertical-axis wind power generator unit provided in the embodiment of this disclosure shares a single tower body, thereby reducing the amount of steel used for the tower body, reducing the floor space, and lowering the cost of constructing the steamer-type vertical-axis wind power generator.

In some embodiments, referring to FIG. 1, two adjacent wind power generators 2 include a first wind power generator and a second wind power generator stacked on the first wind power generator;
at least two second connecting members 4 between the first connecting member 3 at the bottom of the first wind power generator and the first connecting member 3 at the bottom of the second wind power generator are spaced apart and surround the first wind power generator.

In some embodiments, the number of second connecting members 4 between the first connecting member 3 at the bottom of the first wind power generator and the first connecting member 3 at the bottom of the second wind power generator may be a first predetermined number. Exemplarily, the predetermined number may be 3.

In some embodiments, a spacing distance between two adjacent second connecting members 4 that are located between the first connecting member 3 at the bottom of the first wind power generator and the first connecting member 3 at the bottom of the second wind power generator is greater than a predetermined distance. Thus, sufficient gaps can be reserved between two adjacent second connecting members 4 for air current to pass through, thereby providing wind energy used for power generation to the first wind power generator.

In some embodiments, the spacing distances between two adjacent second connecting members 4 that are located between the first connecting member 3 at the bottom of the first wind power generator and the first connecting member 3 at the bottom of the second wind power generator are the same. Thus, at least two second connecting members 4 between the first connecting member 3 at the bottom of the first wind power generator and the first connecting member 3 at the bottom of the second wind power generator can be uniformly distributed around the first wind power generator. At this time, during the process of supporting the first connecting member 3, each second connecting member 4 is subjected to uniform force, thereby improving the service life of each second connecting member 4.

In embodiments of the present disclosure, by providing at least two second connecting members 4 at intervals between the first connecting member 3 at the bottom of the first wind power generator and the first connecting member 3 at the bottom of the second wind power generator, and by making at least two second connecting members 4 surround the first wind power generator, a support force may be provided from multiple directions so that the first connecting member 3 at the bottom of the first wind power generator and the first connecting member 3 at the bottom of the second wind power generator are stably connected. Thus, the connection stability between the first connecting member 3 at the bottom of the first wind power generator and the first connecting member 3 at the bottom of the second wind power generator can be improved.

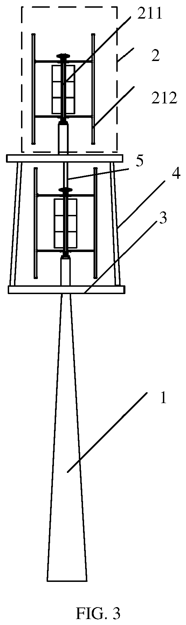

In some embodiments, referring to FIG. 3, the wind power generation apparatus further includes:
a third connecting member 5 connected between a top of the first wind power generator and the first connecting member 3 at the bottom of the second wind power generator.

In some embodiments, the third connecting member 5 may include a connecting board, a connecting rod, or a connecting column.

In some embodiments, the wind power generation apparatus includes a third wind power generator, the third wind power generator is the wind power generator 2 located at the top among at least two stacked wind power generators 2. That is, the third wind power generator is the wind power generator 2 located at the uppermost layer among at least two stacked wind power generators 2.

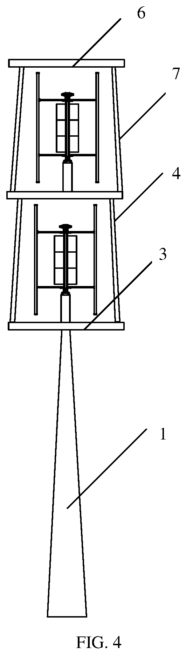

In some embodiments, referring to FIG. 4, a fourth connecting member 6 may be arranged at the top of the second wind power generator. The fourth connecting member 6 at the top of the second wind power generator and the first connecting member 3 at the bottom of the second wind power generator may be connected by at least two fifth connecting members 7. The arrangement direction of the fourth connecting member 6 may be different from the arrangement direction of the fifth connecting member 7. Here, at least two fifth connecting members 7 can be arranged between the first connecting member 3 at the bottom of the second wind power generator and the fourth connecting member 6 at the top of the second wind power generator, and the first connecting member 3 arranged at the bottom of the second wind power generator may be stably connected to the first connecting member 3 at the bottom of other wind power generator located below the second wind power generator. Thus, the second wind power generator arranged at the uppermost layer and other wind power generator located below the second wind power generator, that are arranged in a stacked manner, can be stably connected to each other, thereby enhancing the connection stability between respective wind power generators.

In some embodiments, the arrangement direction of the fourth connecting member 6 may be the same as the arrangement direction of the first connecting member 3, and the arrangement direction of the fifth connecting member 7 may be the same as the arrangement direction of the second connecting member 4.

In some embodiments, the fourth connecting member 6 may include a connecting plate, a connecting board, or a connecting rod. The structure of the fourth connecting member 6 may be the same as the structure of the first connecting member 3. The fifth connecting member 7 may include a connecting rod or a connecting column. The structure of the fifth connecting member 7 may be the same as the structure of the second connecting member 4.

In some embodiments, at least two fifth connecting members between the first connecting member 3 at the bottom of the third wind power generator and the fourth connecting member at the top of the third wind power generator are spaced apart and surround the third wind power generator.

In some embodiments, a spacing distance between two adjacent fifth connecting members is greater than a predetermined distance. Thus, sufficient gaps can be reserved between two adjacent fifth connecting members 7 for air current to pass through, to provide wind energy that can be used for power generation for the third wind power generator.

In some embodiments, the spacing distances between two adjacent fifth connecting members are the same. Thus, at least two fifth connecting members 7 can be uniformly distributed around the third wind power generator. At this time, during the process of the fifth connecting member 7 supporting the fourth connecting member located at the top of the third wind power generator, each fifth connecting member 7 is subjected to a uniform force, thereby improving stability and the service life of each fifth connecting member 7.

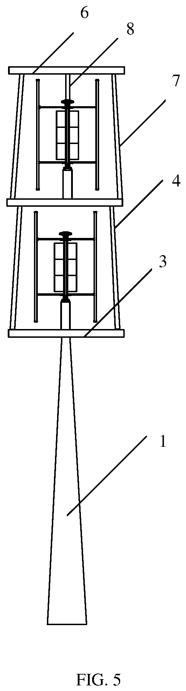

In some embodiments, referring to FIG. 5, a sixth connecting member 8 may be arranged at the top of the second wind power generator, a fourth connecting member 6 may be arranged above the sixth connecting member 8, and the sixth connecting member 8 may be connected to the fourth connecting member 6. The sixth connecting member 8 may include a connecting board, a connecting rod, or a connecting column. The structure of the sixth connecting member 8 may be the same as the structure of the third connecting member 5.

In embodiments of the present disclosure, by providing the third connecting member 5 between the top of the first wind power generator and the first connecting member 3 at the bottom of the second wind power generator, the stability of the first wind power generator can be improved.

In some embodiments, the third connecting member 5 includes:
a first bearing connected to the top of the first wind power generator;
a connecting rod connected to the first connecting member 3 at the bottom of the second wind power generator;
a first rotating body arranged between the first bearing and the connecting rod and connected to the first bearing and the connecting rod respectively.

In some embodiments, the connecting rod may be detachably connected to the first connecting member 3 at the bottom of the second wind power generator. For example, the connecting rod may be threaded connected to the first connecting member 3 at the bottom of the second wind power generator. Alternatively, the connecting rod may be fixedly connected to the first connecting member 3 at the bottom of the second wind power generator.

In some embodiments, the first rotating body may be fixedly connected to the first bearing and the connecting rod, respectively. Alternatively, the first rotating body may be detachably connected to the first bearing and the connecting rod, respectively.

In some embodiments, the sixth connecting member 8 may include: a fourth bearing connected to the fourth connecting member 6; a connecting rod connected to the first connecting member 3 at the bottom of the third wind power generator; a third rotating body arranged between the connecting rod and the fourth bearing and connected to the fourth bearing and the connecting rod, respectively. It should be noted that, for the convenience of distinction, the connecting rod included in the third connecting member 5 may be referred to as a first connecting rod, and the connecting rod in the sixth connecting member 8 may be referred to as a second connecting rod.

In the embodiments of the present disclosure, the top of the first wind power generator and the first connecting member 3 at the bottom of the second wind power generator can be securely connected through the first bearing, the connecting rod, and the first rotating body.

In some embodiments, referring to FIG. 2, the first connecting member 3 is arranged along a direction perpendicular to the extending direction of the tower body 1; and/or, the second connecting member 4 is arranged along a direction parallel to the extending direction of the tower body 1.

In some embodiments, the first connecting member 3 may be arranged along a direction perpendicular to the extending direction of the tower body 1, and the arrangement direction of the second connecting member 4 may be any direction different from the direction perpendicular to the extending direction of the tower body 1.

It should be noted that the arrangement direction of the second connecting member 4 may be different from the direction perpendicular to the extending direction of the tower body 1, and the arrangement direction of the second connecting member 4 may be different from the direction parallel to the extending direction of the tower body 1. At this time, the first connecting member 3 and the second connecting member 4 may not be perpendicular to each other, and the second connecting member 4 may support two first connecting members 3 provided at the bottoms of two adjacent wind power generators 2 by means of oblique support.

In some embodiments, the second connecting member 4 may be arranged along a direction parallel to the extending direction of the tower body 1, and the arrangement direction of the first connecting member 3 may be any direction different from the direction parallel to the extending direction of the tower body 1.

It should be noted that the arrangement direction of the first connecting member 3 may be different from the direction parallel to the extending direction of the tower body 1, and the arrangement direction of the first connecting member 3 may be different from the direction perpendicular to the extending direction of the tower body 1. At this time, the first connecting member 3 and the second connecting member 4 may not be perpendicular to each other, and the second connecting member 4 may support two first connecting members 3 provided at the bottoms of two adjacent wind power generators 2 by means of oblique support.

In some embodiments, the first connecting member 3 may be arranged along a direction perpendicular to the extending direction of the tower body 1, and the second connecting member 4 may be arranged along a direction parallel to the extending direction of the tower body 1.

It should be noted that, here, since the first connecting member 3 is arranged along the direction perpendicular to the extending direction of the tower body 1, and the second connecting member 4 is arranged along the direction parallel to the extending direction of the tower body 1, the arrangement direction of the first connecting member 3 and the arrangement direction of the second connecting member 4 are perpendicular to each other. That is, the first connecting member 3 and the second connecting member 4 are perpendicular to each other.

In embodiments of the present disclosure, by arranging the first connecting member 3 along the direction perpendicular to the extending direction of the tower body 1, a balancing force along the direction perpendicular to the extending direction can be provided for the wind power generators 2 provided along the extending direction of the tower body 1 in a stacked manner; and/or, by arranging the second connecting member 4 along the direction parallel to the extending direction of the tower body 1, the wind power generators 2 provided along the extending direction of the tower body 1 in a stacked manner can be provided with a support force along the extending direction of the tower body 1. Thus, the connection stability between respective wind power generators 2 can be enhanced.

In some embodiments, the first connecting member 3 includes a connecting plate, a connecting board, or a connecting rod.

The second connecting member 4 includes a connecting column or a connecting rod.

In some embodiments, the first connecting member 3 may include at least two first connecting rods. At least two first connecting rods may be cross-arranged at the bottom of the wind power generator 2, and contacting portions between at least two first connecting rods are detachably connected to each other. The bottom of the wind power generator 2 may be connected at the contact regions between at least two first connecting rods.

It should be noted that the above is merely an illustrative example of the structure of the first connecting member 3 and the second connecting member 4. The specific structure of the first connecting member 3 and the second connecting member 4 is not limited to the types illustrated above. The structure of the first connecting member 3 and/or the second connecting member 4 may be designed according to actual application requirements.

In some embodiments, the first connecting member 3 is detachably connected to the second connecting member 4.

It should be noted that, here, it is possible not to limit the manner in which the detachable connection between the first connecting member 3 and the second connecting member 4 is carried out. Exemplarily, the first connecting member 3 may be threaded connected to the second connecting member 4. For example, the first connecting member 3 and the second connecting member 4 may be connected by a preset number of fastening screws. Exemplarily, the first connecting member 3 and the second connecting member 4 may also be connected to each other by snap-fit connection, hinge connection, or riveting connection.

In the embodiments of the present disclosure, since the first connecting member 3 is detachably connected to the second connecting member 4, when maintenance is required on the wind power generator 2, the first connecting member 3 at the bottom of wind power generator 2 and the second connecting member 4 between two adjacent first connecting members 3 can be flexibly detached to facilitate maintenance on the wind power generator 2. Thus, the flexibility of maintaining the wind power generator 2 can be improved.

In some embodiments, the quantity of the second connecting members 4 between two first connecting members 3 provided at the bottoms of two adjacent wind power generators 2 is positively correlated with the quantity of the wind power generators 2.

In some embodiments, the number of stacked wind power generators 2 may be a second predetermined number. Exemplarily, the second predetermined number may be 3. Here, the specific number of stacked wind power generators 2 is not limited; and the number of stacked wind power generators 2 can be increased or decreased according to actual needs.

In some embodiments, two adjacent wind power generators 2 may include a first wind power generator and a second wind power generator stacked on the first wind power generator. The number of second connecting members 4 arranged between the first wind power generator and the second wind power generator is positively correlated with the total number of wind power generators 2. Exemplarily, if the total number of wind power generators 2 is 2, the number of second connecting members 4 between two first connecting members 3 at the bottoms of two adjacent wind power generators 2 may be 2. If the total number of wind power generators 2 is 5, the number of second connecting members 4 between two first connecting members 3 at the bottoms of two adjacent wind power generators 2 may be 3.

In some embodiments, the number of second connecting members 4 provided between the first wind power generator and the second wind power generator may be the same as the total number of wind power generators 2.

Exemplarily, if the total number of wind power generators 2 is 2, the number of second connecting members 4 between two first connecting members 3 at the bottoms of two adjacent wind power generators 2 may be 2. If the total number of wind power generators 2 is 5, the number of second connecting members 4 between two first connecting members 3 at the bottoms of two adjacent wind power generators 2 may be 5.

In some embodiments, the first connecting member 3 has a first size in a direction parallel to the extending direction of the tower body 1, and the first size may be positively correlated with the number of stacked wind power generators 2. And/or, the second connecting member 4 has a second size in a direction parallel to the extending direction of the tower body 1, and the second size may be positively correlated with the number of stacked wind power generators 2. And/or, the tower body 1 has a third size in a direction parallel to the extending direction of the tower body 1. The third size may be positively correlated with the number of stacked wind power generators 2. Here, when the number of wind power generator 2 increases, at least one of the first size, second size, and third size can be increased to enhance the mechanical strength of the tower body 1 or the connecting member, thereby increasing the connection stability between the wind power generators 2.

In the embodiments of the present disclosure, since the number of second connecting members 4 between two first connecting members 3 at the bottoms of two adjacent wind power generators 2 is positively correlated with the number of wind power generators 2, when the number of wind power generators 2 increases, the connection stability between two adjacent wind power generators 2 can be increased by increasing the number of second connecting members 4. Thus, when there are a large number of wind power generators 2, the connection stability between a large number of respective wind power generator 2 can be improved by increasing the number of second connecting members 4.

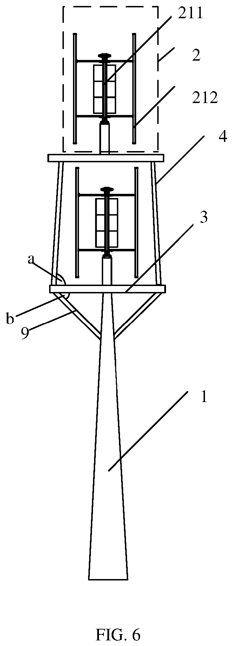

In some embodiments, referring to FIG. 6, the first connecting member 3 at the bottom of the wind power generator 2 located at the first layer is connected to the top of the tower body 1.

In some embodiments, the first connecting member 3 at the bottom of the wind power generator 2 located at the first layer may be fixedly connected to the top of the tower body 1. Alternatively, the first connecting member 3 at the bottom of the wind power generator 2 located at the first layer may be detachably connected to the top of the tower body 1. Exemplarily, the first connecting member 3 at the bottom of the wind power generator 2 located at the first layer and the top of the tower body 1 can be connected by fastening screws.

In some embodiments, referring to FIG. 6, the first connecting member 3 at the bottom of the wind power generator 2 located at the first layer is connected to the top of the tower body 1 through a seventh connecting member 9. The arrangement direction of the first connecting member 3 may be different from the arrangement direction of the seventh connecting member 9, and the arrangement direction of the seventh connecting member 9 may be different from the extending direction of the tower body 1. Exemplarily, a second included angle b between the arrangement direction of the first connecting member 3 and the arrangement direction of the seventh connecting member 9 may be an acute angle, and a third included angle between the arrangement direction of the seventh connecting member 9 and the extending direction of the tower body 1 may be an acute angle. That is to say, the first connecting member 3 and the tower body 1 can form an oblique support structure through the seventh connecting member 9. Thus, the first connecting member 3 and the tower body 1 can be stably connected to each other through the seventh connecting member 9 to improve the connection stability between the first-layer wind power generator 2 and the tower body.

In the embodiment of the present disclosure, a support force can be provided to the first connecting member 3 located at the bottom of the wind power generator 2 at the first layer through the tower body 1, thereby enabling stable connection between the first-layer wind power generator 2 and the wind power generator 2 stacked on the first-layer wind power generator 2.

In some embodiments, a stator coil 224 of each wind power generator 2 is connected to an external circuit.

It should be noted that each wind power generator 2 is provided with a wind wheel 21, a stator coil 224, and a rotator connected to the wind wheel 21. The rotator may be a magnetic component. When the wind wheel 21 of the wind power generator 2 rotates, the wind wheel 21 can drive the rotator to rotate relative to the stator coil 224. At this time, the stator coil 224 can generate current based on electromagnetic induction and output the generated current to the external circuit connected to the stator coil 224.

In the embodiments of the present disclosure, since the stator coil 224 of each wind power generator 2 is connected to an external circuit, each wind power generator 2 can independently transfer electrical energy to the external circuit connected to the stator coil 224 through its own stator coil 224. Thus, the independence of each wind power generator 2 during power generation can be improved, reducing mutual interference between respective wind power generators 2 during power generation, and thereby enhancing the reliability of each wind power generator 2 during power generation.

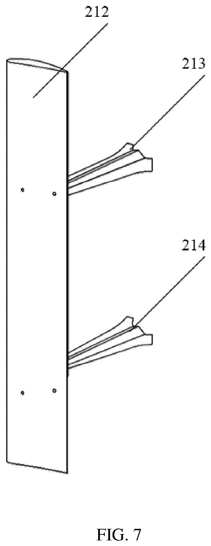

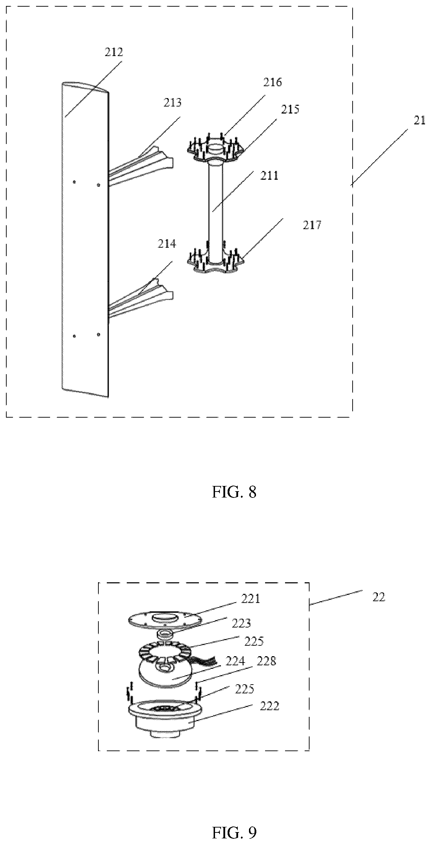

In some embodiments, referring to FIGS. 7 and 8, the wind power generator includes:
a wind wheel 21 including a rotation shaft 211 and at least two blades 212; where a first support plate 215 and a second support plate 217 are formed at two ends of the rotation shaft 211 respectively, and each blade 212 is connected to the first support plate 215 and the second support plate 217;
a power generation module 22 connected to the rotation shaft 211, the power generation module 22 being configured to generate electricity under a drive of the wind wheel 21;
a second rotating body 23 arranged between the power generation module 22 and the first connecting member 3 at the bottom of the wind power generator, the second rotating body 23 being connected to the first connecting member 3 and the power generation module 22 respectively.

In some embodiments, the first connecting member 3 may include a first flange plate, and the second rotating body 23 may include a second flange plate. The first flange plate and the second flange plate may be connected by threads. At this time, the second rotating body 23 can be understood as a type of flange revolution body.

In some embodiments, referring to FIGS. 7 and 8, each blade 212 is connected to the first support plate 215 through a first support member 213, and connected to the second support plate 217 through a second support member 214.

In some embodiments, the arrangement direction of the blade 212 may be a direction parallel to the extending direction of the tower body 1. For example, the extending direction of the tower body 1 may be perpendicular to the ground. At this time, the arrangement direction of the blade 212 may also be perpendicular to the ground.

In some embodiments, a first end of the rotation shaft 211 may be fixedly connected to the first support plate 215, or the first end of the rotation shaft 211 may be detachably connected to the first support plate 215. A second end of the rotation shaft 211 may be fixedly connected to the second support plate 217, or the second end of the rotation shaft 211 may be detachably connected to the second support plate 217.

In some embodiments, each blade 212 is detachably connected to the first support plate 215 through the first support member 213, and connected to the second support plate 217 through the second support member 214. Alternatively, each blade 212 is fixedly connected to the first support plate 215 through the first support member 213, and is fixedly connected to the second support plate 217 through the second support member 214.

In some embodiments, the first support member 213 may be detachably connected to the first support plate 215 through first bolts 216 (as shown in FIG. 8). And/or, the second support member 214 may be detachably connected to the second support plate 217 through first bolts 216.

In some embodiments, the first support plate 215 is located above the second support plate 217. The third connecting member 5 may be arranged between the first support plate 215 of the first wind power generator and the first connecting member 3 at the bottom of the second wind power generator, and connected to the first support plate 215 and the first connecting member 3. The sixth connecting member 8 may be arranged between the first support plate 215 of the third wind power generator and the fourth connecting member 6, and connected to the first support plate 215 and the fourth connecting member 6.

In the embodiments of the present disclosure, each blade 212 can be securely mounted on the rotating shaft 211 through a fastening connection between the blade 212 and the first support plate 215 arranged on the first end of the rotating shaft 211, and a fastening connection between the blade 212 and the second support plate 217 arranged on the second end of the rotating shaft 211, thereby improving the reliability of the blade 212 in the wind wheel 21 during rotation.

In some embodiments, referring to FIG. 9, the power generation module 22 includes:
a housing 222 arranged between the wind wheel 21 and the second rotating body 23, the housing 222 being connected to the second rotating body 23 and provided with a through hole;
a stator coil 224 arranged in the housing 222 and connected to the housing 222;
a magnetic component 225 arranged in the housing 222 and connected to the rotation shaft 211 penetrated through the through hole through a second bearing 223; where under the drive of the rotating axis 211, the magnetic component 225 can rotate relative to the stator coil 224.

In some embodiments, referring to FIG. 9, the power generation module 22 further includes an end cover 221. The end cover 221 covers and is located above the housing 222 and is provided with a through hole for the rotation shaft 211 to pass through. The end cover 221 is connected to the housing 222. Exemplarily, the end cover 221 and the housing 222 may be connected by threads. For example, as shown in FIG. 9, the end cover 221 and the housing 222 may be connected by second bolts 228.

In some embodiments, the magnetic component 225 includes a first magnetic component arranged on a first side of the stator coil 224 and a second magnetic component arranged on a second side of the stator coil 224. The magnetism of the first magnetic component and the second magnetic component may be different. Exemplarily, both the first magnetic component and the second magnetic component may be magnetic steel.

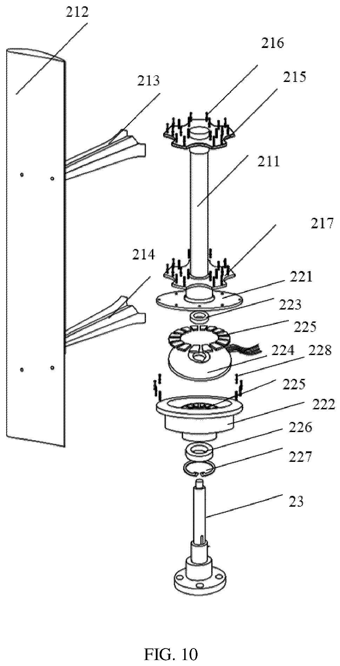

In some embodiments, referring to FIGS. 9 and 10, the wind power generation apparatus further includes: a third bearing 226 arranged between the housing 222 of the power generation module 22 and the second rotating body 23, and the third bearing 226 is connected to the housing 222 of the power generation module 22 and the second rotating body 23.

In some embodiments, referring to FIGS. 9 and 10, the wind power generation apparatus further includes: a bearing retaining ring 227 arranged between the third bearing 226 and the second rotating body 23 and connected to the third bearing 226 and the second rotating body 23. Here, the bearing retaining ring 227 can reduce friction between the third bearing 226 and the second rotating body 23, thereby reducing abrasion of the third bearing 226 and the second rotating body 23.

In embodiments of the present disclosure, by arranging the stator coil 224 within the housing 222 and the magnetic component 225 that can rotate relative to the stator coil 224, it is possible to trigger the stator coil 224 to perform electromagnetic induction to generate current, thereby realizing wind power generation.

After considering the specification and practicing the present disclosure disclosed herein, those skilled in the art will easily think of other embodiments of the present disclosure. This disclosure is intended to cover any variations, uses, or adaptive changes of the present disclosure; and these variations, uses, or adaptive changes follow the general principles of the present disclosure and include common general knowledge or conventional technical means in the art not disclosed in the present disclosure. The specification and embodiments are only regarded as exemplary, the true scope and spirit of the present disclosure are indicated by the claims below.

It should be understood that the present disclosure is not limited to the precise structure described above and illustrated in the drawings, and various modifications and changes can be made without departing from its scope. The scope of the present disclosure is limited only by the appended claims.

## Claims

1. A wind power generation apparatus, comprising:
a tower body (1);
at least two wind power generators (2) arranged on the tower body (1) and stacked to each other along an extending direction of the tower body (1);
wherein a rotation shaft (211) of each wind power generator (2) is parallel to the extending direction, and a bottom of the each wind power generator (2) is connected to a first connecting member (3);
two first connecting members (3) at bottoms of two adjacent wind power generators (2) are connected by at least two second connecting members (4), and an arrangement direction of the second connecting members (4) is different from an arrangement direction of the first connecting members (3).

2. The wind power generation apparatus according to claim 1, wherein the two adjacent wind power generators (2) comprise a first wind power generator (2) and a second wind power generator (2) stacked on the first wind power generator (2);
the at least two second connecting members (4) between the first connecting member (3) at a bottom of the first wind power generator (2) and the first connecting member (3) at a bottom of the second wind power generator (2) are spaced apart and surround the first wind power generator (2).

3. The wind power generation apparatus according to claim 2, wherein the wind power generation apparatus further comprises:
a third connecting member (5) connected between a top of the first wind power generator (2) and the first connecting member (3) at the bottom of the second wind power generator (2).

4. The wind power generation apparatus according to claim 3, wherein the third connecting member (5) comprises:
a first bearing connected to the top of the first wind power generator (2);
a connecting rod connected to the first connecting member (3) at the bottom of the second wind power generator (2);
a first rotating body arranged between the first bearing and the connecting rod and connected to the first bearing and the connecting rod respectively.

5. The wind power generation apparatus according to any one of claims 1 to 4, wherein the first connecting member (3) is arranged along a direction perpendicular to the extending direction; and/or,
the second connecting member (4) is arranged along a direction parallel to the extending direction.

6. The wind power generation apparatus according to any one of claims 1 to 4, wherein the first connecting member (3) comprises a connecting plate, a connecting board, or a connecting rod;
the second connecting member (4) comprises a connecting column or a connecting rod.

7. The wind power generation apparatus according to any one of claims 1 to 4, wherein the first connecting member (3) is detachably connected to the second connecting member (4).

8. The wind power generation apparatus according to any one of claims 1 to 4, wherein a quantity of the second connecting members (4) between the two first connecting members (3) at the bottoms of the two adjacent wind power generators (2) is positively correlated with a quantity of the wind power generators (2).

9. The wind power generation apparatus according to any one of claims 1 to 4, wherein the first connecting member (3) at the bottom of the wind power generator (2) located in a first layer is connected to a top of the tower body (1).

10. The wind power generation apparatus according to any one of claims 1 to 4, wherein a stator coil (224) of each wind power generator (2) is respectively connected to an external circuit.

11. The wind power generation apparatus according to any one of claims 1 to 4, wherein the wind power generator (2) comprises:
a wind wheel (21) comprising the rotation shaft (211) and at least two blades (212), wherein a first support plate (215) and a second support plate (217) are formed at two ends of the rotation shaft (211) respectively, and each blade (212) is connected to the first support plate (215) and the second support plate (217);
a power generation module (22) connected to the rotation shaft (211), the power generation module (22) being configured to generate electricity under a drive of the rotation shaft (211);
a second rotating body (23) arranged between the power generation module (22) and the first connecting member (3) at the bottom of the wind power generator (2), the second rotating body (23) being connected to the first connecting member (3) and the power generation module (22) respectively.

12. The wind power generation apparatus according to claim 11, wherein the power generation module (22) comprises:
a housing (222) arranged between the wind wheel (21) and the second rotating body (23), the housing (222) being connected to the second rotating body (23) and provided with a through hole;
a stator coil (224) arranged inside the housing (222) and connected to the housing (222);
a magnetic assembly arranged inside the housing (222) and connected to the rotation shaft (211) penetrated through the through hole by a second bearing (223), the magnetic assembly being capable of rotating relative to the stator coil (224) under a drive of the rotation shaft (211).
